# EUROPEAN PATENT APPLICATION

(11) **EP 4 632 010 A1**
(43) Date of publication of application: **15.10.2025**
(21) Application number: 23900581.2
(22) Date of filing: 01.12.2023
(51) Int. Cl.: C08L 81/02, B32B 15/08, B32B 27/00, C08L 27/12, H01B 7/02

(54) **RESIN COMPOSITION, MOLDED BODY, COMPOSITE BODY AND USE OF SAME**

(30) Priority: 05.12.2022 JP 2022194180
(71) Applicant: AGC Inc., Chiyoda-ku Tokyo 100-8405 (JP)
(72) Inventor: ABE, Masatoshi, Tokyo 100-8405 (JP); OCHI, Yousuke, Tokyo 100-8405 (JP); SASAKI, Toru, Tokyo 100-8405 (JP); NISHI, Mai, Tokyo 100-8405 (JP); YODOGAWA, Masahide, Tokyo 100-8405 (JP)
(74) Representative: Müller-Boré & Partner Patentanwälte PartG mbB
(86) International application number: PCT/JP2023/043133
(87) International publication number: WO 2024/122466

(57) **Abstract**

The present invention provides a resin composition from which a molded body having excellent stress cracking resistance is obtained, the resin composition having excellent moldability, a molded body obtained by molding the resin composition, a composite body having the molded body, and use applications thereof.

A resin composition of the present invention comprises a polyarylene sulfide resin A and a fluorine-containing elastomer B having a terminal functional group, in which a volume ratio of the polyarylene sulfide resin A to the fluorine-containing elastomer B is 99:1 to 50:50, the fluorine-containing elastomer B is dispersed in the polyarylene sulfide resin A, and the average dispersed particle diameter of the fluorine-containing elastomer B is less than 10 µm.

## Description

### BACKGROUND OF THE INVENTION

### Field of the Invention

The present invention relates to a resin composition, a molded body, a composite, and use applications thereof.

### Description of Related Art

A polyarylene sulfide resin typified by a polyphenylene sulfide resin is known as a resin excellent in heat resistance, solvent resistance, electrical properties, dimensional stability, flame retardance, and the like. However, the polyarylene sulfide resin is poor in toughness. In addition, the tensile strength and the impact resistance are inferior. Therefore, attempts have been made to improve the polyarylene sulfide resin.
For example, Patent Document 1 proposes a resin composition in which a copolymer having a unit based on vinylidene fluoride and a unit based on chlorotrifluoroethylene is blended with a polyarylene sulfide resin to improve mechanical properties and the like.

### Related Art Document

### Patent Document

[Patent Document 1] Published Japanese Translation No. 2020-517774 of the PCT International Publication

### SUMMARY OF THE INVENTION

### Technical Problem

However, in the resin composition of Patent Document 1, the moldability in a case of heat molding is not good. Therefore, cracks are likely to be generated in the molded body during the heat molding.
In addition, in a case where the resin composition of Patent Document 1 is applied to, for example, the molding of a coating layer of an electric wire, even though the coating layer can be formed around the core wire, cracks are likely to be generated in the coating layer in a case where the electric wire is bent. In this way, the stress cracking resistance is also insufficient.

The present invention provides a resin composition from which a molded body having excellent stress cracking resistance is obtained, the resin composition having excellent moldability, a molded body obtained by molding the resin composition, a composite body having the molded body, and use applications thereof.

### Solution to Problem

The present invention has the following aspects.
[1] A resin composition comprising a polyarylene sulfide resin A and a fluorine-containing elastomer B having a terminal functional group, in which a volume ratio of the polyarylene sulfide resin A to the fluorine-containing elastomer B is 99:1 to 50:50, the fluorine-containing elastomer B is dispersed in the polyarylene sulfide resin A, and the average dispersed particle diameter of the fluorine-containing elastomer B is less than 10 µm.
[2] The resin composition according to [1], in which a melt viscosity ratio of a melt viscosity µ_{A} of the polyarylene sulfide resin A to a melt viscosity µ_{B} the fluorine-containing elastomer B is 0.3 or more.
[3] The resin composition according to [1] or [2], in which the terminal functional group is at least one selected from the group consisting of an iodine atom, an epoxy group, and an acid anhydride group.
[4] The resin composition according to any one of [1] to [3], in which the volume ratio of the polyarylene sulfide resin A to the fluorine-containing elastomer B is 95:5 to 50:50.
[5] The resin composition according to any one of [1] to [4], in which a melt viscosity µ of the resin composition is 300 to 420 Pa·s.
[6] A molded body of the resin composition according to any one of [1] to [5].
[7] A composite body in which the molded body according to [6] and another material other than the molded body are combined or laminated.
[8] An electrical wire or a film comprising the molded body according to [6] as an insulating member.

### Advantageous Effects of Invention

According to the resin composition of the present invention, a molded body having excellent stress cracking resistance may be obtained. In addition, the resin composition of the present invention has excellent moldability.

The molded body of the present invention has excellent stress cracking resistance.

The composite of the present invention has a molded body having excellent stress cracking resistance.

The electrical wire or film of the present invention has an insulating member having excellent stress cracking resistance.

### DETAILED DESCRIPTION OF THE INVENTION

The meanings of the terms are as follows.

The "volume" of the polyarylene sulfide resin A or the fluorine-containing elastomer B is a value calculated by dividing the mass (g) of the polyarylene sulfide resin A or the fluorine-containing elastomer B by the specific gravity (g/cm³).

The "specific gravity" of the polyarylene sulfide resin A or the fluorine-containing elastomer B is a value at 23°C measured by a water displacement (suspension) method.

The "average dispersed particle diameter" of the fluorine-containing elastomer B is a value obtained by observing a molded body of the resin composition with a scanning electron microscope (SEM) and arithmetically averaging measured values of the maximum diameters of 100 randomly selected domains (dispersed particles).

The "number-average particle diameter" of the fluorine-containing elastomer B is the average value of the maximum diameters of each of 100 particles randomly selected in the observation with an optical microscope.

The "melt viscosity" is determined by the method described in Examples. The measurement conditions for the melt viscosity are a temperature of 320°C and a shear rate of 122 s⁻¹.

The "melt flow rate" is a melt mass flow rate (MFR) defined in JIS K 7210-1: 2014 (corresponding international standard ISO 1133-1: 2011). The measurement conditions for the melt flow rate are a temperature of 297°C and a load of 21 N.

The "terminal of the polymer chain" is a concept including both the terminal of the main chain and the terminal of the branched chain.

The "main chain" refers to a main carbon chain of a chain-type compound, and means a trunk portion having the maximum number of carbon atoms.

The "acid anhydride group" means a group represented by -C(=O)-O-C(=O)-.

The "fluorine content" of the fluorine-containing elastomer B indicates a proportion of a mass of a fluorine atom to a total mass of all atoms constituting the fluorine-containing elastomer B.

The fluorine content is calculated from the molar ratio of each unit in the fluorine-containing elastomer B, which is obtained by melt NMR measurement and total fluorine content measurement.

The "storage elastic modulus G‴ is a value measured under conditions of 100°C and 50 cpm in conformity with ASTM D6204.

The "Mooney viscosity (ML₁₊₁₀, 121°C)" is a value measured at 121°C in accordance with JIS K 6300-1:2000 (corresponding international standards ISO 289-1:2005 and ISO 289-2:1994).

The "tensile strength" and "tensile elongation" are determined by the method described in Examples.

The "bending strength" and the "bending elastic modulus" are determined by the method described in Examples.

The "Izod impact strength" is determined by the method described in Examples.

The term "monomer" refers to a compound having a polymerizable carbon-carbon double bond.

The phrase "unit based on a monomer" is a generic phrase for an atomic group directly formed by polymerizing one monomer molecule and an atomic group obtained by chemically converting a part of the atomic group.

A unit based on a monomer is simply referred to as a "monomer unit". For example, a unit based on ethylene is referred to as an "ethylene unit".

The unit represented by Formula a is referred to as a "unit a". The same applies to units represented by other formulae.

The compound represented by Formula 1 is referred to as "Compound 1". The same applies to compounds represented by other formulae.

The term "to" indicating a numerical value range means that numerical values described before and after "to" are included as the lower limit value and the upper limit value.

The numerical value ranges disclosed in the present specification can be set to new numerical value ranges by optionally combining the lower limit values and upper limit values thereof.

### <Resin Composition>

The resin composition according to the embodiment of the present invention comprises a polyarylene sulfide resin A and a fluorine-containing elastomer B having a terminal functional group. The resin composition according to the embodiment of the present invention may further comprise other components other than the polyarylene sulfide resin A and the fluorine-containing elastomer B, as long as the effects of the present invention are not impaired.

The volume ratio (A:B) of the polyarylene sulfide resin A to the fluorine-containing elastomer B is 99:1 to 50:50, preferably 95:5 to 50:50, more preferably 90:10 to 50:50, still more preferably 85:15 to 50:50, even still more preferably 80:20 to 50:50, particularly preferably 75:25 to 55:45, and most preferably 70:30 to 60:40.

The proportion of the volume of the fluorine-containing elastomer B is equal to or more than the lower limit value of the volume ratio range, whereby the resin composition has excellent moldability. In addition, a molded body having excellent stress cracking resistance is obtained. In addition, as the proportion of the volume of the fluorine-containing elastomer B increases, the impact resistance of the molded body is improved. The proportion of the volume of the fluorine-containing elastomer B is equal to or less than the upper limit value of the volume ratio range, whereby the properties of the polyarylene sulfide resin A, such as heat resistance, are likely to be exhibited.

The total of the volume of the polyarylene sulfide resin A and the volume of the fluorine-containing elastomer B in the volume of the resin composition is preferably 50% to 100% by volume, more preferably 60% to 99% by volume, and still more preferably 70% to 97% by volume.

In a case where the total of the volume of the polyarylene sulfide resin A and the volume of the fluorine-containing elastomer B is equal to or more than the lower limit value within the numerical value range, the moldability, stress cracking resistance, and impact resistance are likely to be exhibited. In a case where the total of the volume of the polyarylene sulfide resin A and the volume of the fluorine-containing elastomer B is 99% by volume or less, new properties derived from other components are likely to be exhibited.

The total volume of the other components in the volume of the resin composition is preferably 0% to 50% by volume, more preferably 1% to 40% by volume, and still more preferably 3% to 30% by volume.

In the resin composition according to the embodiment of the present invention, the fluorine-containing elastomer B having a terminal functional group is dispersed as fine particles in the polyarylene sulfide resin A. Therefore, the stress cracking resistance of the molded body is improved. In addition, the moldability of the resin composition is also improved.

The average dispersed particle diameter of the fluorine-containing elastomer B having a terminal functional group, which is dispersed in the polyarylene sulfide resin A, is less than 10 µm. Therefore, the stress cracking resistance of the molded body is improved. In addition, the moldability of the resin composition is also improved.

The average dispersed particle diameter of the fluorine-containing elastomer B dispersed in the polyarylene sulfide resin A is preferably 0.1 to 9.5 µm, more preferably 0.5 to 8.0 µm, and still more preferably 0.7 to 6.0 µm. In a case where the average dispersed particle diameter is equal to or more than the lower limit value within the numerical value range, the impact resistance is further improved. In a case where the average dispersed particle diameter is equal to or less than the upper limit value within the numerical value range, the moldability and the stress cracking resistance are further improved.

### (Polyarylene Sulfide Resin A)

A polyarylene sulfide resin A (hereinafter, may be referred to as a "PAS resin") is a polymer having the following unit a at a ratio of 70% by mole or more to 100% by mole of all the constitutional units.

[-Ar-S-] ... Formula a

In Formula a, Ar is a divalent aromatic group.

The divalent aromatic group comprises one or more benzene rings. In a case where the divalent aromatic group comprises two or more benzene rings, the two or more benzene rings may form a condensed ring or may be bonded to each other through a single bond or a linking group. Examples of the linking group include -O-, -S(=O)₂-, and -C(=O)-.

The divalent aromatic group may have a substituent. Examples of the substituent include an alkyl group, a nitro group, a phenyl group, an alkoxy group, a carboxy group, and a metal salt of a carboxylic acid (a sodium salt, a lithium salt, or the like). The number of carbon atoms in each of the alkyl group and the alkoxy group is, for example, 1 to 10.

Examples of the unit a include the following units a1 to a9. The unit a may be used alone or a combination of two or more types thereof may be used.

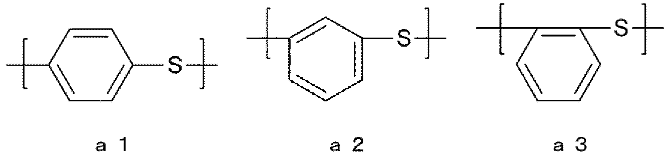

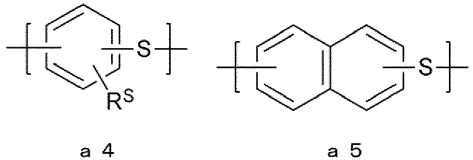

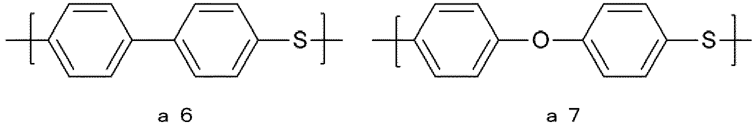

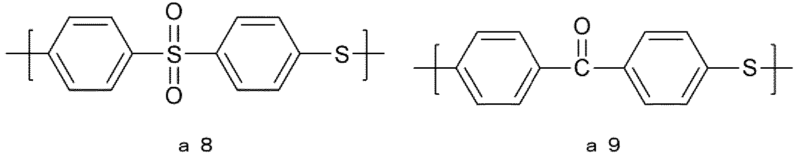

In Formula a4, R^{S} is an alkyl group, a nitro group, a phenyl group, an alkoxy group, a carboxy group, or a metal salt of a carboxylic acid.

The PAS resin may further have other units other than the unit a. Examples of the other units other than the unit a include a polyfunctional unit in which one or more -S-'s are further bonded to Ar of the unit a. The polyfunctional unit has three or more bonding sites. In a case where the PAS resin has a polyfunctional unit, the PAS resin has a branched structure or a crosslinked structure.

In the PAS resin, the proportion of the unit a to 100% by mole of all the units is preferably 80% by mole or more and more preferably 85% by mole or more from the viewpoint of toughness. The upper limit of the proportion of the unit a is not particularly limited, and may be 100% by mole.

As the PAS resin, a polyphenylene sulfide resin (hereinafter, also referred to as a "PPS resin") is preferable from the viewpoint of heat resistance. The PPS resin is a polymer having a unit a1 at a proportion of 70% by mole or more to 100% by mole of all the constitutional units.

The PPS resin may further have a unit a other than the unit a1. Examples of the unit a other than the unit a1 include units a2 to a9. The unit a other than the unit a1 may be used alone or a combination of two or more types thereof may be used.

The PPS resin may further have other units other than the unit a. Examples of the other unit other than the unit a in the PPS resin, include a polyfunctional unit in which one or more -S-'s are further bonded to Ar of the unit a, as similar as the other units in the PAS resin.

In the PPS resin, the proportion of the unit a1 to 100% by mole of all the units is preferably 80% by mole or more and more preferably 85% by mole or more from the viewpoint of toughness. The upper limit of the proportion of the unit a1 is not particularly limited, and may be 100% by mole.

The polymerization method of the PAS resin is not particularly limited. Examples thereof include a method of reacting sodium sulfide with at least p-dichlorobenzene in an amide-based solvent such as N-methylpyrrolidone or dimethylacetamide, or a sulfone-based solvent such as sulfolane can be mentioned. In this case, an alkali metal carboxylate such as sodium acetate or lithium acetate may be added to adjust the degree of polymerization. After the completion of the polymerization, the obtained resin may be washed. Furthermore, after the washing, the resin may be treated with an aqueous solution comprising an acid such as hydrochloric acid or acetic acid, a water-organic solvent mixed solution, or the like, or may be treated with a salt solution such as ammonium chloride.

The PAS resin includes a PAS resin having a linear molecular structure and a PAS resin having a crosslinked molecular structure based on the manufacturing method thereof. The linear PAS resin is linear and does not have a branched structure and a crosslinked structure. The crosslinked PAS resin has a branched structure or a crosslinked structure.

A PAS resin obtained by any manufacturing method can be used, but a linear PAS resin is preferable from the viewpoint of improving the toughness of the resin composition.

### (Fluorine-containing elastomer B)

The fluorine-containing elastomer B is a fluorine-containing elastic copolymer having no melting point and exhibiting a storage elastic modulus G' of 80 or more at 100°C and 50 cpm, and is distinguished from any fluororesin.

The fluorine-containing elastomer B has a terminal functional group. Therefore, the moldability of the resin composition is improved. As the terminal functional group, at least one selected from the group consisting of an iodine atom, an epoxy group, and an acid anhydride group is preferable from the viewpoint of moldability, and an iodine atom is more preferable.

The terminal functional group comprised in the fluorine-containing elastomer B may be bonded to a terminal of the polymer chain of the fluorine-containing elastomer B, may be bonded to a side group, or may be bonded to both the terminal of the polymer chain and the side group of the polymer chain. From the viewpoint of moldability, the terminal functional group is preferably bonded to at least the terminal of the polymer chain of the fluorine-containing elastomer B.

The content of the terminal functional group comprised in the fluorine-containing elastomer B is not particularly limited. In a case where the fluorine-containing elastomer B has, for example, an iodine atom as a terminal functional group, the content of the iodine atom as the terminal functional group is preferably 0.01% to 5.0% by mass, more preferably 0.05% to 2.0% by mass, and still more preferably 0.05% to 1.0% by mass with respect to the total mass of the fluorine-containing elastomer B.

In a case where the content of the iodine atom is equal to or more than the lower limit value within the numerical value range, the resin composition has further excellent moldability. In a case where the content of the iodine atom is equal to or more than the upper limit value within the numerical value range, the fluorine-containing elastomer B is easily obtained.

The fluorine-containing elastomer B having a terminal functional group is preferably a fluorine-containing elastic copolymer having one or more units based on the following monomer m1.

The monomer m1 is at least one monomer selected from the group consisting of tetrafluoroethylene (hereinafter, also referred to as "TFE"), hexafluoropropylene (hereinafter, also referred to as "HFP"), vinylidene fluoride (hereinafter, also referred to as "VdF"), and chlorotrifluoroethylene (hereinafter, also referred to as "CTFE"). The monomers m1 may be used alone or a combination of two or more types thereof may be used.

The fluorine-containing elastomer B having a terminal functional group may be a fluorine-containing elastic copolymer having two or more types of monomers m1 units, or may be a fluorine-containing elastic copolymer having one or more types of monomers m1 units and one or more types of units based on the following monomer m2 that is copolymerizable with the monomer m1.

The monomer m2 is at least one monomer selected from the group consisting of ethylene (hereinafter, also referred to as "E"), propylene (hereinafter, also referred to as "P"), perfluoro(alkyl vinyl ether) (hereinafter, also referred to as "PAVE"), vinyl fluoride (hereinafter, also referred to as "VF"), 1,2-difluoroethylene (hereinafter, also referred to as "DiFE"), 1, 1,2-trifluoroethylene (hereinafter, also referred to as "TrFE"), 3,3,3-trifluoro-1-propylene (hereinafter, also referred to as "TFP"), 1,3,3,3-tetrafluoropropylene, and 2,3,3,3-tetrafluoropropylene. The monomers m2 may be used alone or a combination of two or more types thereof may be used.

PAVE is Compound 1 described below.

CF₂=CF(OR^{F}) ... Formula 1

In Formula 1, R^{F} is a linear or branched perfluoroalkyl group having 1 to 10 carbon atoms.

Examples of PAVE include perfluoro(methyl vinyl ether) (hereinafter, also referred to as "PMVE"), perfluoro(ethyl vinyl ether), perfluoro(propyl vinyl ether) (hereinafter, also referred to as "PPVE"), and perfluoro(butyl vinyl ether). Among these, the PAVE is preferably the PMVE or the PPVE, and more preferably the PMVE. The PAVE may be used alone or a combination of two or more types thereof may be used.

The fluorine-containing elastomer B having a terminal functional group may have one or more units based on the following monomer m3 that is copolymerizable with the monomer m1. The monomer m3 is a monomer that is copolymerizable with the monomer m1 and of which a copolymer with the monomer m1 is an elastic copolymer, and is a monomer other than the monomer m1 and the monomer m2. The monomers m3 may be used alone or a combination of two or more types thereof may be used.

The proportion of the monomer m3 unit is preferably 20% by mole or less, more preferably 5% by mole or less, and particularly preferably 0% by mole with respect to all the units constituting the fluorine-containing elastomer B.

A monomer having a terminal functional group may be used as the monomer m3.

In a case of synthesizing the fluorine-containing elastomer B having an iodine atom as a terminal functional group, an iodine atom can be introduced into the side group of the fluorine-containing elastomer B by using a monomer having an iodine atom.

Examples of the monomer having an iodine atom include iodoethylene, 4-iodo-3,3,4,4-tetrafluoro-1-butene, 2-iodo-1,1,2,2-tetrafluoro-1-vinyloxyethane, 2-iodoethyl vinyl ether, allyl iodide,
1,1,2,3,3,3-hexafluoro-2-iodo-1-(perfluorovinyloxy)propane,
3,3,4,5,5,5-hexafluoro-4-iodopentene, iodotrifluoroethylene, and 2-iodoperfluoro(ethyl vinyl ether).

The monomer having an iodine atom may be used alone or a combination of two or more types thereof may be used.

**In** a case of synthesizing the fluorine-containing elastomer B having an epoxy group as a terminal functional group, the epoxy group can be introduced into a side group of the fluorine-containing elastomer B by using a monomer having an epoxy group.

Examples of the monomer having an epoxy group include glycidyl esters of (meth)acrylic acid such as glycidyl (meth)acrylate and β-methylglycidyl (meth)acrylate; allyl glycidyl ethers such as allyl glycidyl ether and allyl methylglycidyl ether; and alicyclic epoxy group-containing vinyl monomers such as 3,4-epoxycyclohexyl acrylate and 3,4-epoxycyclohexyl methacrylate.

The monomer having an epoxy group may be used alone or a combination of two or more types thereof may be used.

**In** a case of synthesizing the fluorine-containing elastomer B having an acid anhydride group as a terminal functional group, the acid anhydride group can be introduced into a side group of the fluorine-containing elastomer B by using a monomer having an acid anhydride group.

Examples of the monomer having an acid anhydride group include itaconic acid anhydride, citraconic acid anhydride, 5-norbornene-2,3-dicarboxylic acid anhydride, and maleic acid anhydride.

The monomer having an acid anhydride group may be used alone or a combination of two or more types thereof may be used.

In the fluorine-containing elastomer B having a terminal functional group, it is preferable that all the units constituting the fluorine-containing elastomer B consist of two or three types of the monomer m1 units or consist of one or more types of the monomer m1 units and one or more types of the monomer m2 units. However, the fluorine-containing elastomer B may have units other than the above-described units as impurities or the like as long as the properties of the resin composition are not affected.

Examples of the fluorine-containing elastomer B having a terminal functional group include the following three copolymers.
· a copolymer having a TFE unit and a P unit
· a copolymer having an HFP unit and a VdF unit (however, excluding a copolymer having a P unit)
· a copolymer having a TFE unit and a PAVE unit (however, excluding a copolymer having a P unit or a VdF unit)

The total proportion of each of the units specifically shown in these three types of copolymers is preferably 50% by mole or more with respect to all the units constituting the copolymer.

Examples of the copolymer having a TFE unit and a P unit include the following copolymers. Hereinafter, all of the copolymers provided as exemplary examples below have a terminal functional group.

A copolymer consisting of a TFE unit and a P unit,
a copolymer consisting of a TFE unit, a P unit, and a VF unit,
a copolymer consisting of a TFE unit, a P unit, and a VdF unit,
a copolymer consisting of a TFE unit, a P unit, and an E unit,
a copolymer consisting of a TFE unit, a P unit, and a TFP unit,
a copolymer consisting of a TFE unit, a P unit, and a PAVE unit,
a copolymer consisting of a TFE unit, a P unit, and a 1,3,3,3-tetrafluoropropene unit,
a copolymer consisting of a TFE unit, a P unit, and a 2,3,3,3-tetrafluoropropene unit,
a copolymer consisting of a TFE unit, a P unit, and a TrFE unit,
a copolymer consisting of a TFE unit, a P unit, and a DiFE unit,
a copolymer consisting of a TFE unit, a P unit, a VdF unit, and a TFP unit, and
a copolymer consisting of a TFE unit, a P unit, a VdF unit, and a PAVE unit.

Among these, the copolymer consisting of a TFE unit and a P unit is preferable as the copolymer having a TFE unit and a P unit.

Examples of the copolymer having an HFP unit and a VdF unit include the following copolymers.

A copolymer consisting of an HFP unit and a VdF unit,
a copolymer consisting of a TFE unit, a VdF unit, and an HFP unit,
a copolymer consisting of a TFE unit, a VdF unit, an HFP unit, and a TFP unit,
a copolymer consisting of a TFE unit, a VdF unit, an HFP unit, and a PAVE unit,
a copolymer consisting of a VdF unit, an HFP unit, and a TFP unit, and
a copolymer consisting of a VdF unit, an HFP unit, and a PAVE unit.

Among these, the copolymer consisting of an HFP unit and a VdF unit is preferable as the copolymer having an HFP unit and a VdF unit.

Examples of the copolymer having a TFE unit and a PAVE unit include a copolymer consisting of a TFE unit and a PAVE unit. Among these, a copolymer consisting of a TFE unit and a PMVE unit or a copolymer consisting of a TFE unit, a PMVE unit, and a PPVE unit is preferable, and the copolymer consisting of a TFE unit and a PMVE unit is more preferable.

Other examples of the fluorine-containing elastomer B having a terminal functional group include the following copolymers.

A copolymer consisting of a TFE unit, a VdF unit, and a 2,3,3,3-tetrafluoropropylene unit,
a copolymer consisting of a VdF unit and a PAVE unit,
a copolymer consisting of a VdF unit and a 2,3,3,3-tetrafluoropropylene unit, and
a copolymer consisting of an E unit and an HFP unit.

The fluorine-containing elastomer B having a terminal functional group is preferably the copolymer having a TFE unit and a P unit, the copolymer having an HFP unit and a VdF unit, or the copolymer having a TFE unit and a PAVE unit, more preferably the copolymer having a TFE unit and a P unit, and particularly preferably the copolymer consisting of a TFE unit and a P unit.

The copolymer consisting of a TFE unit and a P unit has good thermal stability during melt-kneading. Therefore, the transportability during the melt-kneading is stabilized.

From the viewpoint of impact resistance of the molded body, the proportion of each unit constituting the fluorine-containing elastomer B having a terminal functional group is preferably in the following ranges.

The molar ratio of each unit in the copolymer consisting of a TFE unit and a P unit (hereinafter, referred to as "TFE:P", and the same applies to other molar ratios) is preferably 30 to 80:70 to 20, more preferably 40 to 70:60 to 30, and still more preferably 50 to 60:50 to 40.

In the copolymer consisting of a TFE unit, a P unit, and a VF unit, TFE:P:VF is preferably 30 to 60:60 to 20:0.05 to 40.

In the copolymer consisting of a TFE unit, a P unit, and a VdF unit, TFE:P:VdF is preferably 30 to 60:60 to 20:0.05 to 40.

In the copolymer consisting of a TFE unit, a P unit, and an E unit, TFE:P:E is preferably 20 to 60:70 to 30:0.05 to 40.

In the copolymer consisting of a TFE unit, a P unit, and a TFP unit, TFE:P:TFP is preferably 30 to 60:60 to 30:0.05 to 20.

In the copolymer consisting of a TFE unit, a P unit, and a PAVE unit, TFE:P:PAVE is preferably 40 to 70:60 to 29.95:0.05 to 20.

In the copolymer consisting of a TFE unit, a P unit, and a 1,3,3,3-tetrafluoropropene unit, TFE:P: 1,3,3,3-tetrafluoropropene is preferably 30 to 60:60 to 20:0.05 to 40.

In the copolymer consisting of a TFE unit, a P unit, and a 2,3,3,3-tetrafluoropropene unit, TFE:P:2,3,3,3-tetrafluoropropene is preferably 30 to 60:60 to 20:0.05 to 40.

In the copolymer consisting of a TFE unit, a P unit, and a TrFE unit, TFE:P:TrFE is preferably 30 to 60:60 to 20:0.05 to 40.

In the copolymer consisting of a TFE unit, a P unit, and a DiFE unit, TFE:P:DiFE is preferably 30 to 60:60 to 20:0.05 to 40.

In the copolymer consisting of a TFE unit, a P unit, a VdF unit, and a TFP unit, TFE:P:VdF:TFP is preferably 30 to 60:60 to 20:0.05 to 40:0.05 to 20.

In the copolymer consisting of a TFE unit, a P unit, a VdF unit, and a PAVE unit, TFE:P:VdF:PAVE is preferably 30 to 70:60 to 20:0.05 to 40:0.05 to 20.

In the copolymer consisting of an HFP unit and a VdF unit, HFP:VdF is preferably 99 to 5:1 to 95.

In the copolymer consisting of a TFE unit, a VdF unit, and an HFP unit, TFE:VdF:HFP is preferably 20 to 60:1 to 40:20 to 60.

In the copolymer consisting of a TFE unit, a VdF unit, an HFP unit, and a TFP unit, TFE:VdF:HFP:TFP is preferably 30 to 60:0.05 to 40:60 to 20:0.05 to 20.

In the copolymer consisting of a TFE unit, a VdF unit, an HFP unit, and a PAVE unit, TFE:VdF:HFP:PAVE is preferably 30 to 70:60 to 20:0.05 to 40:0.05 to 20.

In the copolymer consisting of a VdF unit, an HFP unit, and a TFP unit, the ratio of VdF:HFP:TFP is preferably 1 to 90:95 to 5:0.05 to 20.

In the copolymer consisting of a VdF unit, an HFP unit, and a PAVE unit, the ratio of VdF:HFP:PAVE is preferably 20 to 90:9.95 to 70:0.05 to 20.

In the copolymer consisting of a TFE unit and a PAVE unit, TFE:PAVE is preferably 40 to 70:60 to 30. In a case of a copolymer consisting of a TFE unit and a PMVE unit, TFE:PMVE is preferably 40 to 70:60 to 30.

In the copolymer consisting of a TFE unit, a PMVE unit, and a PPVE unit, TFE:PMVE:PPVE is preferably 40 to 70:3 to 57:3 to 57.

In the copolymer consisting of a TFE unit, a VdF unit, and a 2,3,3,3-tetrafluoropropylene unit, TFE:VdF:2,3,3,3-tetrafluoropropylene is preferably 1 to 30:30 to 90:5 to 60.

In the copolymer consisting of a VdF unit and a PAVE unit, VdF:PAVE is preferably 3 to 95:97 to 5.

In the copolymer consisting of a VdF unit and a 2,3,3,3-tetrafluoropropylene unit, VdF:2,3,3,3-tetrafluoropropylene is preferably 30 to 95:70 to 5.

In the copolymer consisting of an E unit and an HFP unit, E:HFP is preferably 40 to 60:60 to 40.

The fluorine content of the fluorine-containing elastomer B is preferably 50% to 74% by mass and more preferably 55% to 70% by mass. The fluorine content of a copolymer consisting of a TFE unit and a P unit is preferably 57% to 60% by mass, the fluorine content of a copolymer consisting of an HFP unit and a VdF unit is preferably 66% to 71% by mass, and the fluorine content of a copolymer consisting of a TFE unit and a PMVE unit is preferably 66% to 70% by mass. In a case where the fluorine content is equal to or more than the lower limit value within the numerical value range, the heat resistance and the chemical resistance are improved. In a case where the fluorine content is equal to or less than the upper limit value within the numerical value range, the impact resistance is improved.

The storage elastic modulus G' of the fluorine-containing elastomer B is preferably 80 to 800, more preferably 100 to 800, and still more preferably 120 to 600. The larger the storage elastic modulus G' is, the larger the molecular weight of the fluorine-containing elastomer B is, which indicates that the density of entanglement of the molecular chain is also higher. In a case where the storage elastic modulus G' of the fluorine-containing elastomer B is within the numerical value range, mechanical properties such as tensile strength are improved.

The number-average molecular weight of the fluorine-containing elastomer B is preferably 10,000 to 1,500,000, more preferably 20,000 to 1,000,000, still more preferably 20,000 to 800,000, and particularly preferably 50,000 to 600,000. In a case where the number-average molecular weight of the fluorine-containing elastomer B is equal to or more than the lower limit value within the numerical value range, the impact resistance and the mechanical properties are improved. In a case where the number-average molecular weight of the fluorine-containing elastomer B is equal to or less than the upper limit value within the numerical value range, the fluidity and the dispersibility are improved. As a result, the flexibility is improved.

The Mooney viscosity (ML₁₊₁₀, 121°C) of the fluorine-containing elastomer B is preferably 10 to 300, more preferably 20 to 280, and still more preferably 30 to 250. The Mooney viscosity is a measure of molecular weight. The larger the value of the Mooney viscosity is, the larger the molecular weight is. In addition, the smaller the value of the Mooney viscosity is, the smaller the molecular weight is.

In a case where the Mooney viscosity (ML₁₊₁₀, 121°C) of the fluorine-containing elastomer B is equal to or more than the lower limit value within the numerical value range, the impact resistance and the mechanical properties are improved. In a case where the Mooney viscosity (ML₁₊₁₀, 121°C) of the fluorine-containing elastomer B is equal to or less than the upper limit value within the numerical value range, the fluidity and the dispersibility are improved. As a result, the resin composition has further excellent moldability.

The fluorine-containing elastomer B may be used alone or a combination of two or more types thereof may be used, but it is preferable to be used alone.

The fluorine-containing elastomer B may be a commercially available product or may be synthesized from various raw materials by various methods.

The fluorine-containing elastomer B can be synthesized, for example, by polymerizing one or more types of the monomers m1 and, as necessary, one or more types of any one or both of the monomer m2 and the monomer m3.

In the polymerization, it is preferable to use a radical polymerization initiator.

As the radical polymerization initiator, a compound having a half-life of 10 hours at a temperature of 0°C to 100°C is preferable, and a compound having a temperature of 20°C to 90°C is particularly preferable. Examples thereof include azo compounds (azobisisobutyronitrile and the like), non-fluorinated diacyl peroxides (isobutyryl peroxide, octanoyl peroxide, benzoyl peroxide, lauroyl peroxide, and the like), peroxydicarbonates (diisopropyl peroxydicarbonate and the like), peroxyesters (tert-butyl peroxypivalate, tert-butyl peroxyisobutyrate, tert-butyl peroxyacetate, and the like), fluorine-containing diacyl peroxides (following Compound 2 and the like), and inorganic persulfates (potassium persulfate, sodium persulfate, ammonium persulfate, and the like).

(Z(CF₂)ᵣCOO)₂·...· Formula 2

In Formula 2, Z represents a hydrogen atom, a fluorine atom, or a chlorine atom, and r represents an integer of 1 to 10.

In the polymerization, a chain transfer agent may be used. Examples of the chain transfer agent include following Compound 3, Compound 4, an alcohol (methanol, ethanol, and the like), a chlorofluorohydrocarbons (1,3-dichloro-1,1,2,2,3-pentafluoropropane, 1,1-dichloro-1-fluoroethane, and the like), hydrocarbons (pentane, hexane, cyclohexane, and the like), and mercaptans (tert-dodecyl mercaptan, n-octadecyl mercaptan, and the like).

R¹I₂ ... Formula 3

R²IBr ... Formula 4

In Formula 3, R₁ is an alkylene group having 2 or more carbon atoms or a polyfluoroalkylene group.

In Formula 4, R₂ is an alkylene group having 1 to 16 carbon atoms or a polyfluoroalkylene group.

In R¹ and R², the polyfluoroalkylene group may be linear or branched. As R¹ and R², a perfluoroalkylene group is preferable.

Examples of Compound 3 include 1,4-diiodoperfluorobutane, 1,2-diiodoperfluoroethane, 1,3-diiodoperfluoropropane, 1,5-diiodoperfluoropentane, and 1,6-diiodoperfluorohexane. Among these, 1,4-diiodoperfluorobutane is preferable.

Examples of Compound 4 include 1-iodo-4-bromoperfluorobutane, 1-iodo-6-bromoperfluorohexane, and 1-iodo-8-bromoperfluorooctane.

The iodide compound such as Compound 3 and Compound 4 can function as a chain transfer agent. Therefore, in a case where each monomer is copolymerized in the presence of the iodide compound, an iodine atom can be bonded to the terminal of the main chain of the fluorine-containing elastomer B. In a case of obtaining the fluorine-containing elastomer B having a branched chain, an iodine atom can be similarly bonded to the terminal of the branched chain.

Examples of the polymerization method include an emulsion polymerization method, a solution polymerization method, a suspension polymerization method, and a bulk polymerization method. From the viewpoint that the number-average molecular weight of the fluorine-containing elastomer B and the copolymer composition are easily adjusted, whereby productivity is improved, an emulsion polymerization method of polymerizing a monomer in the presence of an aqueous medium and an emulsifier is preferable.

As the radical polymerization initiator used for the emulsion polymerization, a water-soluble initiator is preferable. Examples of the water-soluble initiator include a persulfate, hydrogen peroxide, a water-soluble organic peroxide, an organic initiator, a redox-based initiator consisting of a combination of a persulfate or hydrogen peroxide and a reducing agent, and an inorganic initiator as a system in which a small amount of iron, a ferrous salt, silver sulfate, or the like is further made to coexist with the redox-based initiator.

Examples of the persulfate include ammonium persulfate, sodium persulfate, and potassium persulfate.

Examples of the water-soluble organic peroxide include disuccinic acid peroxide, diglutaric acid peroxide, and tert-butyl hydroperoxide.

Examples of the organic initiator include azobisisobutylamidine dihydrochloride.

Examples of the reducing agent include sodium hydrogen sulfite and sodium thiosulfate.

In the emulsion polymerization method, monomers are polymerized in the presence of an aqueous medium, an emulsifier, and a radical polymerization initiator to obtain an elastomer latex. A pH adjuster may be used in a case of polymerizing the monomer.

### (Other components)

Examples of the other components include an inorganic filler, a polymer filler, a plasticizer, and a flame retardant. The other components may be used alone or a combination of two or more types thereof may be used.

Examples of the inorganic filler include a glass fiber, a carbon fiber, graphite, graphene, a carbon nanotube, a gypsum fiber, mica, talc, a glass flake, wollastonite, potassium titanate, aluminum borate, boron nitride, aluminum nitride, calcium carbonate, magnesium oxide, tin oxide, silicon oxide (silica), titanium oxide, barium sulfate, zinc oxide, aluminum hydroxide, magnesium hydroxide, clay, white carbon, carbon black, an inorganic pigment, molybdenum disulfide, a metal powder, a magnetic material, and a zeolite.

Examples of the glass fiber include a chopped fiber, a milled fiber, and a flat glass fiber having a modified cross section. In addition, glass fibers having a low dielectric constant can also be used from the viewpoint of electrical properties.

Examples of the carbon fiber include a PAN-based carbon fiber, a pitch-based isotropic carbon fiber, and a pitch-based anisotropic carbon fiber. As for the shape of the carbon fiber, a chopped fiber or a milled fiber can be selected depending on the desired physical properties.

Examples of the carbon black include furnace black, acetylene black, thermal black, and channel black. Among these, furnace black is preferable. Examples of the furnace black include HAF-LS carbon, HAF carbon, HAF-HS carbon, FEF carbon, GPF carbon, APF carbon, SRF-LM carbon, SRF-HM carbon, and MT carbon. Among these, MT carbon is preferable.

The shape of the inorganic filler is not particularly limited, and may be fibrous, plate-like, or particulate (including spherical). From the viewpoint of mechanical properties and friction and wear properties, the shape of the inorganic filler is preferably fibrous. In use applications for which isotropy of a molded body is required, a plate-like inorganic filler or a particulate inorganic filler is preferable. The size of the inorganic filler is not particularly limited. An inorganic filler having any of nano size, micrometer size, and millimeter size can also be used depending on use applications of a molded body.

Examples of the polymer filler include a liquid crystal polymer, a polycarbonate, a polyethylene terephthalate, a polybutylene terephthalate, a polyester elastomer, a polyarylate, a polycaprolactone, a phenoxy resin, a polysulfone, a polyether sulfone, a polyimide, a polyether imide, polyamide 6, polyamide 66, polyamide 11, polyamide 12, polyamide 610, polyamide 46, an aromatic polyamide, a polyamide elastomer, a polyphenylene oxide, a polytetrafluoroethylene, an acrylonitrile-butadiene-styrene copolymer (ABS resin), a polymethyl methacrylate, a polypropylene, a polyethylene, a polybutadiene, a butadiene-styrene copolymer, an ethylene-propylene-diene rubber (EPDM), a styrene-butadiene block copolymer, a butadiene-acrylonitrile copolymer, an acrylic rubber, a styrene-maleic anhydride copolymer, a styrene-phenyl maleimide copolymer, an ethylene/acrylic acid/glycidyl methacrylate copolymer, a silicone elastomer, and an aramid. Among these, polytetrafluoroethylene is suitably used in a case where the dielectric constant and the dielectric loss tangent of the molded body are to be reduced.

Examples of the plasticizer include phthalic acid ester and adipic acid ester.

Examples of the flame retardant include aluminum hydroxide, magnesium hydroxide, magnesium carbonate, antimony trioxide, sodium antimonate, antimony pentoxide, a phosphazene compound, a phosphoric acid ester (triphenyl phosphate, tricresyl phosphate, trixylenyl phosphate, cresyl phenyl phosphate, 2-ethylhexyl diphenyl phosphate, or the like), ammonium polyphosphate, melamine/melam/melem polyphosphate, red phosphorus, a molybdenum compound, a boric acid compound, and polytetrafluoroethylene.

In a case where the resin composition further comprises an inorganic filler as another component, the proportion of the inorganic filler is preferably 0.001 to 20 parts by mass, more preferably 0.01 to 10 parts by mass, and still more preferably 0.1 to 5 parts by mass with respect to 100 parts by mass of the total of the polyarylene sulfide resin A and the fluorine-containing elastomer B. In a case where the proportion of the inorganic filler is equal to or more than the lower limit value within the numerical value range, the properties of the inorganic filler are likely to be exhibited. In a case where the proportion of the inorganic filler is equal to or less than the upper limit value within the numerical value range, the moldability, the stress cracking resistance, and the impact resistance are likely to be exhibited.

### (Preferred Aspect of Resin Composition)

A melt viscosity ratio (µ_{A}/µ_{B}) of the melt viscosity µ_{A} of the polyarylene sulfide resin A to the melt viscosity µ_{B} of the fluorine-containing elastomer B is preferably 0.3 or more, more preferably 0.3 to 1.7, still more preferably 0.5 to 1.4, and particularly preferably 0.7 to 1.2.

In a case where µ_{A}/µ_{B} is equal to or more than the lower limit value within the numerical value range, it is easy to reduce a difference in melt viscosity between the polyarylene sulfide resin A and the fluorine-containing elastomer B. Therefore, the fluorine-containing elastomer B is easily dispersed in the polyarylene sulfide resin A as fine particles. As a result, it is easy to obtain a resin composition having excellent moldability. In addition, a molded body having excellent stress cracking resistance is easily obtained.

In a case where µ_{A}/µ_{B} is equal to or less than the upper limit value within the numerical value range, it is easy to select and determine a combination of the polyarylene sulfide resin A and the fluorine-containing elastomer B, and it is easy to obtain raw materials.

To set µ_{A}/µ_{B} within the numerical value range, µ_{A} is preferably 100 to 1,500 Pa·s and µ_{B} is preferably 100 to 1,500 Pa·s, and µ_{A} is more preferably 300 to 400 Pa·s and µ_{B} is more preferably 300 to 300 Pa·s. Examples of the polyarylene sulfide resin A in which µ_{A} is within the numerical value range include QC-160 and QC-200, which are products of Solvay Specialty Polymers. Examples of the fluorine-containing elastomer B in which µ_{B} is within the numerical value range include a fluorine-containing elastomer B1 used in Examples described later.

The melt viscosity µ of the resin composition is preferably 100 to 1,000 Pa·s, more preferably 200 to 500 Pa·s, and still more preferably 300 to 420 Pa·s.

In a case where the melt viscosity µ of the resin composition is equal to or more than the lower limit value within the numerical value range, the resin composition is easily applied to the heat molding.

In a case where the melt viscosity µ of the resin composition is equal to or less than the upper limit value within the numerical value range, the fluidity in heat molding is high, and the resin composition is further excellent in moldability.

A ratio (MFR_{A}/MFR_{B}) of a melt flow rate MFR_{A} of the polyarylene sulfide resin A to a melt flow rate MFR_{B} of the fluorine-containing elastomer B is preferably 300 or less, more preferably 0.05 to 200, still more preferably 0.1 to 100, and particularly preferably 0.2 to 10.

In a case where MFR_{A}/MFR_{B} is equal to or more than the lower limit value within the numerical value range, it is easy to select and determine a combination of the polyarylene sulfide resin A and the fluorine-containing elastomer B, and it is easy to obtain raw materials.

In a case where MFR_{A}/MFR_{B} is equal to or less than the upper limit value within the numerical value range, it is easy to reduce the difference in melt viscosity between the polyarylene sulfide resin A and the fluorine-containing elastomer B. Therefore, the fluorine-containing elastomer B is easily dispersed in the polyarylene sulfide resin A as fine particles. As a result, a molded body having excellent stress cracking resistance is easily obtained. In addition, it is easy to obtain a resin composition having excellent moldability.

To set MFR_{A}/MFR_{B} within the numerical value range, MFR_{A} is preferably 1 to 200 g/10 min and MFR_{B} is preferably 2 to 170 g/10 min, and MFR_{A} is more preferably 3 to 150 g/10 min and MFR_{B} is more preferably 5 to 100 g/10 min. Examples of the polyarylene sulfide resin A in which MFR_{A} is within the numerical value range include QC-160 and QC-200, which are products of Solvay Specialty Polymers. Examples of the fluorine-containing elastomer B in which MFR_{B} is within the numerical value range include a fluorine-containing elastomer B1 used in Examples described later.

The melt flow rate of MFR of the resin composition is preferably 1 g/10 min or more, more preferably 3 to 180 g/10 min, still more preferably 5 to 150 g/10 min, and particularly preferably 10 to 100 g/10 min.

In a case where the melt flow rate of the resin composition is equal to or more than the lower limit value within the numerical value range, the fluidity in heat molding is high, and the resin composition is further excellent in moldability.

In a case where the melt flow rate of the resin composition is equal to or less than the upper limit value within the numerical value range, the melt viscosity during heat molding is easily appropriately maintained.

The tensile strength in a case where the resin composition is molded into a test piece having a thickness of 4.0 mm is preferably 30 MPa or more, more preferably 35 MPa or more, and still more preferably 40 MPa or more. In a case where the tensile strength is equal to or more than the lower limit value, the molded body has excellent mechanical properties. The upper limit value of the tensile strength is not particularly limited.

The tensile elongation in a case where the resin composition is molded into a test piece having a thickness of 4.0 mm is preferably 8% or more, more preferably 10% or more, and still more preferably 15% or more. In a case where the tensile elongation is equal to or more than the lower limit value, the molded body has excellent mechanical properties. The upper limit value of the tensile elongation is not particularly limited.

The bending strength in a case where the resin composition is molded into a test piece having a thickness of 4.0 mm is preferably 50 MPa or more, more preferably 70 MPa or more, and still more preferably 75 MPa or more. In a case where the bending strength is equal to or more than the lower limit value, the molded body has excellent mechanical properties. The upper limit value of the bending strength is not particularly limited. The upper limit value of the bending strength is, for example, 133 MPa.

The bending elastic modulus in a case where the resin composition is molded into a test piece having a thickness of 4.0 mm is preferably 1,800 MPa or more, more preferably 2,000 MPa or more, and still more preferably 2,200 MPa or more. In a case where the bending elastic modulus is equal to or more than the lower limit value, the molded body has excellent mechanical properties. The upper limit value of the bending elastic modulus is not particularly limited. The upper limit value of the bending elastic modulus is, for example, 4,000 MPa.

The Izod impact strength at 23°C in a case of where the resin composition is molded into a test piece having a thickness of 4.0 mm is preferably 18 J/m or more, more preferably 28 J/m or more, and still more preferably 40 J/m or more. In a case where the Izod impact strength at 23°C is equal to or more than the lower limit value, the molded body has excellent impact resistance at room temperature. The upper limit value of the Izod impact strength at 23°C is not particularly limited, and is, for example, No break (NB).

### (Manufacturing Method of Resin Composition)

The resin composition according to the embodiment of the present invention can be manufactured, for example, by melt-kneading the polyarylene sulfide resin A, the fluorine-containing elastomer B, and other components as necessary.

In a case where the resin composition comprises other components, the other components may be added during the melt-kneading of the polyarylene sulfide resin A and the fluorine-containing elastomer B, or may be added after the polyarylene sulfide resin A and the fluorine-containing elastomer B are melt-kneaded.

The fluorine-containing elastomer B before the melt-kneading is preferably in a crumb shape from the viewpoint of ease of handling during the production of a compound.

The number-average particle diameter of the fluorine-containing elastomer B before the melt-kneading is preferably 10 mm or less, more preferably 8 mm or less, and still more preferably 6 mm or less. In a case where the number-average particle diameter of the fluorine-containing elastomer B before the melt-kneading is equal to or less than the upper limit value, the transportability by the screw is stable during the melt-kneading.

The volume ratio of the polyarylene sulfide resin A to the fluorine-containing elastomer B in the melt-kneading is the same as the volume ratio of the polyarylene sulfide resin A to the fluorine-containing elastomer B in the resin composition. In a case where the volume proportion of the polyarylene sulfide resin A and the volume proportion of the fluorine-containing elastomer B are within the above-described ranges, the appearance roughness of the strand obtained during melt-kneading is small. As a result, the obtained pellet (resin composition) has excellent moldability.

In addition, in a case where the total of the volume proportion of the polyarylene sulfide resin A and the volume proportion of the fluorine-containing elastomer B is within the above-described range and the volume proportion of the polyarylene sulfide resin A is within the above-described range, the moldability, the stress cracking resistance, and the impact resistance are likely to be exhibited.

Examples of the melt-kneading device include devices having various melt-kneading functions. The melt-kneading device is preferably a single-screw extruder or twin-screw extruder which may be equipped with a screw having a high kneading effect, more preferably a twin-screw extruder, and particularly preferably a twin-screw extruder equipped with a screw having a high kneading effect. A screw having a sufficient kneading effect on a melt-kneading target and not applying an excessive shearing force can be selected as the screw having a high kneading effect. Examples of the melt-kneading device include a laboplastomill kneader (manufactured by Toyo Seiki Seisakusho, Ltd.).

As a method of supplying the polyarylene sulfide resin A and the fluorine-containing elastomer B to the melt-kneading device, the polyarylene sulfide resin A and the fluorine-containing elastomer B may be mixed in advance and supplied to the melt-kneading device, or the polyarylene sulfide resin A and the fluorine-containing elastomer B may be separately supplied to the melt-kneading device.

In a case where the resin composition comprises other components, the other components may be mixed with one of the polyarylene sulfide resin A or the fluorine-containing elastomer B in advance and supplied to the melt-kneading device, or may be supplied to the melt kneading device separately from the polyarylene sulfide resin A and the fluorine-containing elastomer B. In addition, the other components may be added after the polyarylene sulfide resin A and the fluorine-containing elastomer B are melt-kneaded.

It is preferable that the melt-kneading is performed such that the particles of the fluorine-containing elastomer B having the average dispersed particle diameter of less than 10 µm are dispersed in the polyarylene sulfide resin A. For example, by appropriately adjusting the melt viscosity ratio (µ_{A}/µ_{B}), the melt-kneading temperature, the extrusion shear rate, and the residence time of the melt-kneading target in the melt-kneading device, the particles of the fluorine-containing elastomer B having the average dispersed particle diameter of less than 10 µm can be dispersed in the polyarylene sulfide resin A.

It is preferable that the melt-kneading temperature is set according to the polyarylene sulfide resin A and the fluorine-containing elastomer B. The melt-kneading temperature is preferably 200°C to 450°C, more preferably 240°C to 400°C, still more preferably 250°C to 350°C, and particularly preferably 280°C to 330°C.

In a case where the melt-kneading temperature is equal to or more than the lower limit value within the numerical value range, the fluorine-containing elastomer B is easily dispersed in the polyarylene sulfide resin A, and the coarse particles of the fluorine-containing elastomer B are hardly left. In a case where the melt-kneading temperature is equal to or less than the upper limit value within the numerical value range, the thermal decomposition of the fluorine-containing elastomer B is not easily promoted, and the heat resistance is improved. In addition, the fluorine-containing elastomer B is not excessively reduced in particle diameter.

It is preferable that the extrusion shear rate in the melt-kneading is set according to the melt viscosity of the melt-kneading target at the melt-kneading temperature. The extrusion shear rate in the melt-kneading is preferably 3 to 2,500 s⁻¹, more preferably 10 to 2,000 s⁻¹, and still more preferably 15 to 1,500 s⁻¹.

In a case where the extrusion shear rate is equal to or more than the lower limit value within the numerical value range, the fluorine-containing elastomer B is easily dispersed in the polyarylene sulfide resin A, and the coarse particles of the fluorine-containing elastomer B are hardly left. In a case where the extrusion shear rate is equal to or less than the upper limit value within the numerical value range, the fluorine-containing elastomer B is not excessively reduced in particle diameter.

The residence time of the melt-kneading target in the melt-kneading device is preferably 10 to 290 seconds, more preferably 20 to 240 seconds, and still more preferably 30 to 210 seconds.

In a case where the residence time of the melt-kneading target in the melt-kneading device is equal to or more than the lower limit value within the numerical value range, the fluorine-containing elastomer B is easily dispersed in the polyarylene sulfide resin A, and the coarse particles of the fluorine-containing elastomer B are hardly left. In a case where the residence time is equal to or less than the upper limit value within the numerical value range, the thermal decomposition of the fluorine-containing elastomer B is not likely to be promoted.

It is preferable that the melt-kneading is performed in the substantial absence of the crosslinking agent and the crosslinking aid. The melt-kneading in the substantial absence of the crosslinking agent and the crosslinking aid means the melt-kneading without substantially crosslinking the fluorine-containing elastomer B in the resin composition. Whether or not the fluorine-containing elastomer B in the resin composition is substantially crosslinked can be confirmed by the value of the bending elastic modulus of the resin composition. In a case where the fluorine-containing elastomer B is substantially crosslinked, the flexibility of the fluorine-containing elastomer B is lost, and thus the bending elastic modulus exceeds 3.7 GPa.

In a case where the melt-kneading is performed in the substantial absence of the crosslinking agent and the crosslinking aid, the flexibility of the fluorine-containing elastomer B in the resin composition can be ensured, and the impact resistance of the molded body can be improved.

However, the melt-kneading may be performed in the presence of the crosslinking agent and the crosslinking aid. In a case where melt-kneading is performed in the presence of the crosslinking agent and the crosslinking aid, the crosslinking agent and the crosslinking aid are only required to use in an amount within a range in which the thermoplasticity of the resin composition can be ensured.

### (Mechanism of Action)

In the resin composition according to the embodiment of the present invention described above, the fluorine-containing elastomer B having a terminal functional group is dispersed in the polyarylene sulfide resin A, and the average dispersed particle diameter of the fluorine-containing elastomer B is less than 10 µm. Therefore, a molded body having excellent stress cracking resistance is obtained, and the resin composition has excellent moldability.

### (Use Applications)

The resin composition according to the embodiment of the present invention can also be used as a coating material in the form of powder. Examples of the use applications of the coated article include those described in PCT International Publication No. WO2015/182702.

In addition, the resin composition according to the embodiment of the present invention is also useful as an additive of a fiber reinforced resin molded body and a matrix resin of a prepreg.

The reinforcing fiber used for the fiber reinforced resin molded body and the prepreg is not particularly limited. Various inorganic fibers, various metal fibers, and various organic fibers can be used.

### <Molded Body>

The molded body of the resin composition according to the embodiment of the present invention is obtained by molding the resin composition according to the embodiment of the present invention. **In** the molded body according to the embodiment of the present invention, the properties of the PAS resin can be exhibited, and thus the molded body can be applied to various use applications where the PAS resin is required. **In** addition, since the molded body according to the embodiment of the present invention is particularly excellent in stress cracking resistance and impact resistance, the molded body can be suitably applied to various use applications requiring these properties.

The molding method is not particularly limited. Various molding methods can be applied. Examples thereof include a melt molding method and an additive manufacturing method.

Examples of the melt molding method include an injection molding method, an extrusion molding method, and a press molding method (thermoforming method).

Examples of the injection molding method include a general injection molding method, a high-speed injection molding method, a multi-color molding method, a co-injection molding method, an injection compression molding method, a gas-assisted injection molding method, a foam injection molding method (MUCELL), a heat-and-cool molding method using a rapidly heated mold, an insert molding method, and an in-mold decoration molding method.

Examples of the extrusion molding method include a film and sheet molding method using a T-die, a tube molding method using a circular die, a profile extrusion molding method, a melt spinning method, and a blow molding method for hollow part formation. A multilayer molded product having two or more layers or a multilayer fiber having a core-sheath structure may be obtained by the extrusion molding method.

The press molding method is a method of thermally molding a single-layer or multilayer sheet.

As the additive manufacturing method, a molding method called 3D printing or additive manufacturing is widely used. Examples thereof include a fused deposition modeling method and a powder sintering additive manufacturing method.

Since general polyarylene sulfide resins are inferior in moldability, cracks are likely to be generated in a molded body particularly during extrusion molding. On the other hand, since the resin composition according to the embodiment of the present invention has excellent moldability, cracks are less likely to be generated in the molded body during extrusion molding. Therefore, in a case where the resin composition according to the embodiment of the present invention is suitable for an extrusion forming method, an extrusion molded body is preferable as the molded body.

The cylinder temperature in the extruder is preferably 300°C to 420°C and more preferably 330°C to 370°C. The die temperature is preferably 350°C to 420°C and more preferably 350°C to 380°C. In a case where the temperature is within the numerical value range, the frictional stress between the molten resin and the die is reduced, and the surface smoothness of the extrusion molded body is improved. In addition, decomposition of the resin due to a thermal history during molding is suppressed, and the surface smoothness of the extrusion molded body is improved.

The extrusion shear rate in the extruder is preferably 3 to 2,500 s⁻¹, more preferably 10 to 1,000 s⁻¹, and still more preferably 10 to 100 s⁻¹.

The residence time of the resin composition in the extruder is preferably 10 to 1,000 seconds and more preferably 60 to 500 seconds.

The molded body according to the embodiment of the present invention may be used as a composite body that is combined or laminated with other materials other than the molded body according to the embodiment of the present invention. Examples of the other materials include metal, glass, plastic, and rubber.

Examples of the plastic include those described in PCT International Publication No. WO2015/182702, a liquid crystal polymer, a polyarylketone, a polyethersulfone, a polyphenylsulfone, a polyacetal, a polyurethane, and a polyamide. Examples of the polyamide include polyamide 6, polyamide 66, polyamide 46, polyamide 11, polyamide 12, polyamide 610, polyamide 612, a polyamide 6/66 copolymer, a polyamide 6/66/610 copolymer, polyamide MXD6, polyamide 6T, polyamide 9T, and a polyamide 6/6T copolymer.

Examples of forms and use applications of the molded body or composite include a housing of a portable electronic device, a coupling member of a portable electronic device, a sliding member, a three-dimensional circuit component, a gear, an actuator, a piston, a bearing, a valve, an aircraft interior material, a bipolar plate, a heat exchanger, a bush, a tube (for fuel or the like), a hose, a tank, a seal, a wire, an insulation covering material for an electric wire (a wire, a cable, or the like), a film, a sheet, a bottle, and a fiber.

Examples of the portable electronic device include a mobile phone, a mobile terminal, a laptop computer, a tablet computer, a radio, a camera, a camera accessory, a clock, a calculator, a music player, a global positioning system receiver, a portable game, a hard drive, a portable recording device, a portable playback device, and a portable radio receiver.

Examples of the form of the housing of the portable electronic device include a back cover, a front cover, an antenna housing, a frame, and a backbone of the portable electronic device. The housing may be a member consisting of a single component of the molded body of the present invention or a member consisting of a plurality of components. The backbone is a member to which components of the portable electronic device, such as electronics, a microprocessor, a screen, a keyboard, a keypad, an antenna, and a battery socket, are attached.

In a case where the housing is inside the portable electronic device, the housing may not be visible from the outside of the portable electronic device or may be partially visible from the outside of the portable electronic device. A housing such as a cover for protecting and supporting an internal structure may be exposed to the outside of the portable electronic device.

Examples of the form of the coupling member of the portable electronic device include snap-fit connectors between a circuit board, a microphone, a speaker, a display, a battery, a cover, an electric connector, an electronic connector, a hinge, an antenna, a switch, and a switch pad of the portable electronic device. The coupling member can be suitably applied to portable electronic devices such as a mobile phone, a mobile terminal (PDA), a music storage device, an eavesdropping device, a portable DVD player, an electric multimeter, a portable electronic game machine, and a portable personal computer (for example, a notebook computer).

The three-dimensional circuit component is a component in which a circuit pattern is formed on the surface of a resin component molded into a three-dimensional shape, and is used as an antenna component of portable electronic devices or a component of in-vehicle electronic devices. As a method for forming a circuit pattern, a laser direct structuring (LDS) method is used in which the circuit pattern is etched with a laser and then a plating treatment is performed.

Examples of use applications of the tube, the hose, the tank, the seal, and the wire include those described in PCT International Publication No. WO2015/182702. In addition, examples of use applications of the tube and the hose include tubes for drilling energy resources such as oil, natural gas, and shale oil.

Examples of use applications of the insulation covering material for an electric wire include an insulation covering material for an electric wire or a rectangular copper wire for a motor coil, particularly, an insulation covering material for a rectangular conductor in a driving motor of a hybrid vehicle (HEV) or an electric vehicle (EV). Examples of the form of the insulation covering material for a rectangular conductor include the film.

Examples of use applications of the insulation covering material for an electric wire also include an insulation covering material for a downhole cable for drilling energy resources (oil, natural gas, shale oil, and the like). Above all, an insulation covering material for a downhole cable for oil drilling is preferable.

Examples of the use applications of the film and the sheet include speaker diaphragms, plates for external wounds or bone fractures, insulating papers such as various electrical insulation adhesive tapes (insulating paper for a motor, and the like), sealing tapes or the like for oil and natural gas pipes, and release films.

An electric wire or a film having the molded body according to the embodiment of the present invention as an insulating member is one of suitable examples of use applications. This is because, in a case where the resin composition according to the embodiment of the present invention is subjected to extrusion molding for manufacturing an electric wire or a film, cracks are less likely to be generated in the extrusion molded body. In addition, the coating layer of the film or the electric wire also has an advantage of excellent stress cracking resistance.

In a case where the molded body is a film, examples of the use applications thereof include a speaker diaphragm provided with a film, a film for covering an electric wire, a flexible printed substrate, a rigid substrate, a coverlay, a housing for an electronic device, a heat-resistant roll for OA equipment, or a film for film impregnation of other fiber composite materials. Other examples thereof include a film capacitor. Examples also include an insulating tape for element stop of an electrolytic capacitor, such as aluminum or tantalum. The thickness of the film is preferably 1 to 100 µm, more preferably 2 to 80 µm, and still more preferably 5 to 50 µm. In a case where the thickness of the film is equal to or more than the lower limit value within the numerical value range, the strength of the film is improved. In a case where the thickness of the film is equal to or less than the upper limit value within the numerical value range, the handleability of the film is improved.

In a case where the molded body is a tube, examples of the use applications thereof include a medical catheter provided with a tube, an electric wire covering, or a piping for an analytical instrument.

In a case where the molded body is a fiber, examples of the use applications thereof include protective clothing and various filters.

As injection-molded products, suitable examples of use applications include a capacitor case, a battery case, and packings for a power storage device such as LIB, particularly a lid packing.

Some embodiments have been described above, but the various embodiments have been suggested as examples and are not intended to limit the scope of the present invention. Each of the embodiments described in the present specification can be variously modified to the extent that the effect of the invention is exhibited, and can be combined with the features described by other embodiments, to the extent practicable. Examples

Hereinafter, the embodiments will be described in more detail with reference to Examples. However, the present invention is not limited to the following description. Examples 1 to 8 are examples. Examples 9 to 13 are comparative examples.

### <Measurement Method and Evaluation Method>

### (Average Dispersed Particle Diameter)

The resin composition was subjected to press molding at 320°C to produce a press sheet (dimensions of 130 mm × 130 mm × 1 mm thickness). The press sheet was freeze-dried and then cut with a cutter, and the cross section thereof was observed with a SEM (JSM-IT700HR manufactured by JEOL Ltd., magnification of 5,000 times). The maximum diameters of 100 domains (dispersed particles) randomly selected from the SEM image were measured, and the arithmetic average value of the maximum diameters of each of the domains was defined as the average dispersed particle diameter. It was confirmed by energy dispersive X-ray spectroscopy (EDS) analysis using JSM-IT700HR manufactured by JEOL Ltd. that the substance in each of the domains was a fluorine-containing polymer (a fluorine-containing elastic copolymer or a fluorine resin).

### (Melt Viscosity (µ, µ_{A}, µ_{B}))

Using a capillograph (manufactured by Toyo Seiki Co., Ltd., capillary length L: 10 mm, capillary inner diameter r: 1.0 mm, piston diameter D: 9.55 mm), the melt viscosity at a temperature of 320°C and a shear rate of 122 s⁻¹ was determined.

### (Melt Flow Rate of Resin Composition: MFR)

The melt flow rate was determined under conditions of a temperature of 297°C and a load of 21 N in accordance with JIS K 7210-1: 2014 (corresponding international standard ISO 1133-1: 2011) using a melt indexer (manufactured by Techno-Seven Co., Ltd.).

### (Melt Flow Rate of Polyarylene Sulfide Resin A: MFR_{A})

The melt flow rate was determined under conditions of a temperature of 297°C and a load of 21 N in accordance with JIS K 7210-1: 2014 (corresponding international standard ISO 1133-1: 2011) using a melt indexer (manufactured by Techno-Seven Co., Ltd.).

### (Melt Flow Rate of Fluorine-Containing Elastomer B: MFR_{B})

The melt flow rate was determined under conditions of a temperature of 297°C and a load of 21 N in accordance with JIS K 7210-1: 2014 (corresponding international standard ISO 1133-1: 2011) using a melt indexer (manufactured by Techno-Seven Co., Ltd.).

### (Mooney Viscosity (ML₁₊₁₀, 121°C))

The measurement was performed at 121°C in accordance with JIS K 6300-1:2000 (corresponding international standards ISO 289-1:2005 and ISO 289-2:1994) using SMV-201 (manufactured by Shimadzu Corporation).

### (Storage Elastic Modulus G')

The measurement was performed at 100°C and 50 cpm in accordance with ASTM D6204 using RPA 2000 (manufactured by Alpha Technologies, Inc.).

### (Production of Injection-Molded Body)

The pellet-like resin composition was pre-dried under heating at 200°C for 3 hours. Next, using an injection molding machine (manufactured by FANUC Corporation, ROBOSHOT α-50), the resin composition was injection-molded under conditions of a cylinder temperature of 380°C and a mold temperature of 170°C to obtain an injection-molded body having a thickness of 4.0 mm.

### (Tensile Strength and Tensile Elongation)

For the injection-molded body, using TENSILON (manufactured by A&D Company, Limited, model: RTF-1350), the tensile strength and tensile elongation were measured at a load cell rating of 10 kN, the distance between chucks of 115 mm, and a speed of 50 mm/min in accordance with JIS K7161 (corresponding international standard ISO 527-1: 2012).

### (Bending Strength and Bending Elastic Modulus)

A test piece having a length of 80 mm and a width of 10 mm was cut out from the injection-molded body. For the test piece, using TENSILON (manufactured by A&D Company, Limited, RTF-1350), bending elastic modulus and bending strength were measured at a load cell rating of 10 kN, a distance between fulcrums of 64 mm, and a speed of 2 mm/min in accordance with JIS K7171 (corresponding international standard ISO 527-1: 2012).

### (Izod Impact Strength)

A test piece having a length of 80 mm and a width of 10 mm was cut out from the injection-molded body, and a notch was made at a position of a height of 40 mm of the test piece.

For the test piece, using an Izod test device (manufactured by Toyo Seiki Seisakusho, Ltd.), an Izod impact strength was measured under the conditions of hammer capacity of 2.75 J, hammer load of 13.97 N, distance from the center of the axis to the center of gravity of 10.54 cm, and distance from the center of the axis to the impact point of 33.5 cm. The measurement was performed at 23°C.

### (Production of Insulated Electric Wire)

As a rectangular conductor, a flat copper wire (oxygen-free copper, height of 1.5 mm × width of 2.3 mm) manufactured by FCM CO., LTD. was used. An insulated wire was obtained by coating the periphery of the flat copper wire with an extrusion molded body of a resin composition. In the coating, using a wire extrusion molding machine comprising the following wire extruder, a screw, a wire die crosshead, a wire take-up machine, and a winding machine, an insulated wire was obtained such that the thickness accuracy of the electric wire diameter was ± 0.03 mm. The conditions for the extrusion molding were set to a die temperature of 350°C and a cylinder temperature of 280°C to 350°C.
· Wire extruder: MS30-25 extruder manufactured by IKG Co., Ltd.
· Screw: full flight type manufactured by IKG Co., Ltd., L/D = 24 (L is a length from a portion where a screw ridge under the hopper port starts to a tip part, and D is a screw diameter, which is 30 mm.)
· Wire die crosshead: manufactured by UNITEK, maximum conductor diameter: 3 mm, maximum die hole diameter: 20 mm
· Wire take-up machine and winding machine: manufactured by Hijiri Manufacturing Ltd.

### (Stress Cracking Resistance)

The insulated electric wire was bent in each of the edgewise direction and the flatwise direction to be deformed. The deformation angle was set to 90° ± 10°. Thereafter, the coating layer of the insulated electric wire was visually observed, and the stress cracking resistance was evaluated according to the following standard.
A: No cracks were generated in the coating layer even in a case where the insulated electric wire was deformed in any of the edgewise direction and the flatwise direction.
B: Cracks were generated in the coating layer in a case where the insulated electric wire was deformed in at least any one bending direction.

### (Production of Evaluation Film)

The resin composition was pre-dried under heating at 200°C for 3 hours. Using a single-screw extruder (manufactured by Tanabe Plastics Machinery Co., Ltd., VS-30) and a 150 mm width T die, the resin composition was subjected to extrusion molding under the conditions of a cylinder temperature of 280°C to 350°C, a die temperature of 320°C, a rotation speed of 6 rpm, and a take-up rate of 1.0 m/min, and passed through a metal roll held at 145°C to obtain an evaluation film having a thickness of 5 µm.

### (Moldability)

The surface of the evaluation film was visually observed, and the moldability was evaluated according to the following standards.
A: Neither pinhole nor neck-in phenomenon occurred in the evaluation film.
B: At least one of a pinhole or a neck-in phenomenon occurred in the evaluation film.

### (MIT)

A press sheet having a thickness of 0.23 mm was obtained by press molding the resin composition with a press plate at 320°C in accordance with ASTM D2176. A test piece having a width of 12.5 mm, a length of 130 mm, and a thickness of 0.23 mm was cut out from the press sheet. Using a MIT bending test device (manufactured by Toyo Seiki Seisakusho, Ltd., MIT-DA), the test piece was bent under the conditions of a temperature of 23°C, a humidity of 50 %RH, a load of 12.25 N, a bending angle of 135 degrees on each of the left and right sides, and the number of times of bending for 1 minute of 175 times, and the number of times (MIT bending life) until the test piece was broken was obtained. The more the number of times is, the more excellent the bend resistance is. In a case where the value was 10,000 or more, the value was described as >10,000 at that point, and the test was interrupted.

### <Materials>

### (Polyarylene Sulfide Resin)

· Polyarylene sulfide resin A1: polyphenylene sulfide (linear type, product of Solvay Specialty Polymers "160P", MFR_{A}: 17 g/10 min, melt viscosity µ_{A}: 358 Pa·s, specific gravity: 1.34 g/cm³).
· Polyarylene sulfide resin A2: polyphenylene sulfide (linear type, product of Solvay Specialty Polymers "MA-520", MFR_{A}: 55.0 g/10 min, melt viscosity µ_{A}: not measured, specific gravity: 1.34 g/cm³).

### (Fluorine-Containing Elastomer)

· Fluorine-containing elastomer B1: TFE unit:P unit = 56:44, a fluorine-containing elastomer having an iodine atom of 0.4% by mass with respect to the mass of the fluorine-containing elastomer as a terminal functional group (MFR_{B}: 27.9 g/10 min, a melting viscosity µ_{B}: 354 Pa·s, a specific gravity: 1.55 g/cm³, a Mooney viscosity (ML₁₊₁₀, 121°C): 50, a storage elastic modulus G': 250)
· Fluorine-containing elastomer B2: TFE unit:P unit = 56:44, a fluorine-containing elastomer having no terminal functional group (a melting viscosity µ_{B}: 1,726 Pa·s, a specific gravity: 1.55 g/cm³, a Mooney viscosity (ML₁₊₁₀, 121°C): 100, a storage elastic modulus G': 390)

### (Inorganic filler)

· MgO: magnesium oxide.

### <Example 1>

The polyarylene sulfide resin A1 and the fluorine-containing elastomer B1 were mixed at a volume ratio shown in Table 1, and then the mixture was charged into a proximal end of a screw of a twin-screw extruder (manufactured by TECHNOVEL CORPORATION, KZW32TW-45MG-NH (-1500), screw diameter: 32 mmΦ, L/D: 45) using a feeder such that a flow rate was 15.0 kg/hour. Under the conditions of a screw rotation speed of 200 rpm, and setting temperatures of a cylinder, a die, and a head of C1 = 340°C, C2 = 360°C, C3 = 370°C, C4 = 370°C, C5 = 370°C, C6 = 370°C, AD = 350°C, and H = 360°C, a strand extruded from a die tip was air-cooled and cut with a pelletizer to obtain pellets of the resin composition. In a case where it was difficult to form strands, the strands were cooled with water instead of being cooled with air, and the strands were cut with a pelletizer to obtain pellets of the resin composition. The evaluation results are shown in Table 1.

### <Examples 2 to 4>

A resin composition was obtained in the same manner as in Example 1, except that the volume ratio of the polyarylene sulfide resin A1 and the fluorine-containing elastomer B1 was changed as shown in Table 1. In Example 4, 0.7 parts by mass of MgO was mixed with respect to 100 parts by mass of the total mass of the polyarylene sulfide resin A1 and the fluorine-containing elastomer B1 before being put into the twin-screw extruder. The evaluation results are shown in Table 1.

### <Examples 5 to 8>

A resin composition was obtained in the same manner as in Examples 1 to 4, except that the polyarylene sulfide resin A2 was used instead of the polyarylene sulfide resin A1. In Example 8, 0.7 parts by mass of MgO was mixed with respect to 100 parts by mass of the total mass of the polyarylene sulfide resin A2 and the fluorine-containing elastomer B1 before being put into the twin-screw extruder. The evaluation results are shown in Table 1.

### <Examples 9 to 11>

A resin composition was obtained in the same manner as in Examples 1 to 3, except that the fluorine-containing elastomer B2 was used instead of the fluorine-containing elastomer B1. The evaluation results are shown in Table 1.

### <Examples 12 and 13>

A resin composition was obtained in the same manner as in Example 1, except that the polyarylene sulfide resin A1 and the polyarylene sulfide resin A2 were each used alone and the fluorine-containing elastomer was not used. The evaluation results are shown in Table 1.

**[Table 1]**

| | Polyarylene sulfide resin A [% by volume] | | Fluorine-containing elastomer B [% by volume] | | MgO [phr] | Average dispersed particle diameter | µ_{A}/µ_{B} [-] | Melt viscosity µ [Pa·s] | MFR [g/10 minutes] | Tensile strength [Mpa] | Tensile elongation [%] | Bending strength [Mpa] | Bending elastic modulus [Mpa] | Izod impact strength [J/m] | Stress cracking resistance | Moldability | MIT |
|---|---|---|---|---|---|---|---|---|---|---|---|---|---|---|---|---|---|
| | A1 | A2 | B1 | B2 | | | | | | | | | | | | | |
| Example 1 | 90 | - | 10 | - | - | 0.7 | 1.01 | 404 | 15.2 | 52.2 | 13.6 | 116.3 | 3217 | 28.1 | A | A | >10,000 |
| Example 2 | 80 | - | 20 | - | - | 3 | 1.01 | 366 | 13.1 | 47.9 | 17.6 | 96.8 | 2757 | 47.6 | A | A | >10,000 |
| Example 3 | 70 | - | 30 | - | - | 5 | 1.01 | 311 | 12.3 | 42.6 | 23.6 | 81.9 | 2397 | 54.5 | A | A | >10,000 |
| Example 4 | 80 | - | 20 | - | 0.7 | 3 | 1.01 | 412 | 13.4 | n/a | n/a | n/a | n/a | 47.8 | A | A | >10,000 |
| Example 5 | - | 90 | 10 | - | - | 1 | n/a | n/a | 47.1 | 67.4 | 8.0 | 116.4 | 3217 | 18.6 | n/a | n/a | n/a |
| Example 6 | - | 80 | 20 | - | - | 4 | n/a | n/a | 54.6 | 54.1 | 8.0 | 95.7 | 2785 | 30.0 | n/a | n/a | n/a |
| Example 7 | - | 70 | 30 | - | - | 5 | n/a | n/a | 53.7 | 43.4 | 13.2 | 77.9 | 2354 | 40.4 | n/a | n/a | n/a |
| Example 8 | - | 80 | 20 | - | 0.7 | 5 | n/a | n/a | 51.6 | n/a | n/a | n/a | n/a | n/a | n/a | n/a | n/a |
| Example 9 | 90 | - | - | 10 | - | 10 | 0.21 | n/a | 14.3 | n/a | n/a | 118 | 3128 | 27.4 | B | B | n/a |
| Example 10 | 80 | - | - | 20 | - | 14 | 0.21 | 425 | 13.2 | n/a | n/a | 90.0 | 2587 | 39.1 | B | B | n/a |
| Example 11 | 70 | - | - | 30 | - | 15 | 0.21 | n/a | 11.2 | n/a | n/a | 69.0 | 1926 | 34.6 | B | B | n/a |
| Example 12 | 100 | - | - | - | - | n/a | n/a | n/a | 17 | 51.3 | 14.8 | 134.6 | 3537 | 19.4 | B | B | 90 |
| Example 13 | - | 100 | - | - | - | n/a | n/a | n/a | 55 | 69.7 | 9.8 | 133.5 | 3451 | 8.2 | B | B | n/a |

The evaluation results of the stress cracking resistance and the moldability of Examples 1 to 4 were superior to those of Examples 9 to 11 in which the fluorine-containing elastomer B2 having no terminal functional group was used. It was confirmed that, by using the fluorine-containing elastomer B having a terminal functional group and setting the average dispersed particle diameter of the fluorine-containing elastomer B to be less than 10 µm, the moldability of the resin composition was excellent and the stress cracking resistance of the molded body was excellent.
In Examples 5 to 8 in which the type of the polyarylene sulfide resin A was changed, it is also expected that the stress cracking resistance and the moldability are excellent.

Regarding the impact resistance, the Izod impact strength of each of Examples 1 to 4 was higher than that of Example 12. In addition, the Izod impact strength of each of Examples 5 to 8 was higher than that of Example 13. In any of Examples 1 to 8, it was confirmed that the Izod impact strength increased as the volume ratio of the fluorine-containing elastomer B increased.

### Industrial Applicability

According to the resin composition of the present invention, a molded body having excellent stress cracking resistance may be obtained. In addition, the resin composition of the present invention has excellent moldability.

The molded body of the present invention has excellent stress cracking resistance.

The composite of the present invention has a molded body having excellent stress cracking resistance.

The electrical wire or film of the present invention has an insulating member having excellent stress cracking resistance.

Priority is claimed on Japanese Patent Application No. 2022-194180, filed December 5, 2022, the content of which is incorporated herein by reference.

## Claims

1. A resin composition comprising:
a polyarylene sulfide resin A; and
a fluorine-containing elastomer B having a terminal functional group,
wherein a volume ratio of the polyarylene sulfide resin A to the fluorine-containing elastomer B is 99:1 to 50:50,
the fluorine-containing elastomer B is dispersed in the polyarylene sulfide resin A, and
the average dispersed particle diameter of the fluorine-containing elastomer B is less than 10 µm.

2. The resin composition according to claim 1,
wherein a melt viscosity ratio of a melt viscosity µ_{A} of the polyarylene sulfide resin A to a melt viscosity µ_{B} the fluorine-containing elastomer B is 0.3 or more.

3. The resin composition according to claim 1,
wherein the terminal functional group is at least one selected from the group consisting of an iodine atom, an epoxy group, and an acid anhydride group.

4. The resin composition according to claim 1,
wherein the volume ratio of the polyarylene sulfide resin A to the fluorine-containing elastomer B is 95:5 to 50:50.

5. The resin composition according to claim 1,
wherein a melt viscosity µ of the resin composition is 300 to 420 Pa·s.

6. A molded body of the resin composition according to any one of claims 1 to 5.

7. A composite body in which the molded body according to claim 6 and another material other than the molded body are combined or laminated.

8. An electrical wire or a film comprising:
the molded body according to claim 6 as an insulating member.
